# FASCICULE DE BREVET EUROPEEN

(11) **EP 3 789 260 B1**
(45) Date de publication et mention de la délivrance du brevet: **29.06.2022**
(21) Numéro de dépôt: 20195052.4
(22) Date de dépôt: 08.09.2020
(51) Int. Cl.: B61D 17/08, B61D 17/10, B61D 17/18

(54) **CAISSE POUR VÉHICULE ET PROCÉDÉ DE MONTAGE D'UNE TELLE CAISSE**
WAGENKASTEN FÜR FAHRZEUG UND VERFAHREN ZUR MONTAGE EINES SOLCHEN WAGENKASTENS
BODY FOR A VEHICLE AND METHOD FOR MOUNTING SUCH A BODY

(30) Priorité: 09.09.2019 FR 1909883
(43) Date de publication de la demande: 10.03.2021
(73) Titulaire: SpeedInnov, 75008 Paris (FR)
(72) Inventeur: COURCIMEAUX, Eric, 17139 DOMPIERRE SUR MER (FR)
(74) Mandataire: Lavoix

(56) Documents cités:
- EP-A1- 2 868 544
- EP-A2- 2 266 858
- DE-A1- 19 927 003

## Description

La présente invention concerne une caisse pour véhicule, notamment ferroviaire, cette caisse comprenant une structure porteuse de plancher, au moins une paroi latérale, une cale disposée à la jonction entre la structure porteuse et la paroi latérale, une couche de revêtement disposée sur la structure porteuse et un capot de finition recouvrant une bordure de la couche de revêtement.

En général, le plancher d'un véhicule ferroviaire comprend une couche de revêtement apparent, de type moquette ou linoléum, qui confère au véhicule un certain confort et une esthétique propre. Ce revêtement apparent est adapté au niveau des finitions du véhicule. Par exemple, la moquette utilisée dans un compartiment de première classe d'une voiture de train est généralement plus épaisse que la moquette utilisée dans un compartiment de deuxième classe.

Il est connu de US-A-2,559,443 de plaquer un revêtement apparent sur une structure porteuse de véhicule ferroviaire, tout en faisant remonter ce revêtement sur une paroi latérale du véhicule, la bordure supérieure du revêtement étant fixée à l'aide de baguettes montées sur les parois latérales au voisinage d'une fenêtre. Dans la zone de transition entre le plancher et la paroi latérale, le revêtement est supporté de façon continue par une tôle métallique formant un congé, le revêtement n'étant pas interrompu dans cette zone. Les baguettes de fixation de la bordure de revêtement sont adaptées à une seule épaisseur de revêtement.

Il est également connu de EP-A-2 266 858 de réaliser une cellule sanitaire pour un véhicule ferroviaire en intégrant une cale à la jonction entre un plancher et une paroi latérale de cette cellule. Une baguette de finition est clipsée sur la cale et vient en recouvrement du revêtement de sol. Ce système permet d'éviter la pénétration des eaux stagnantes dans la zone de jonction entre le plancher et la paroi latérale, mais ne permet pas de garantir l'étanchéité au niveau de la baguette de finition, ni de s'adapter à diverses épaisseurs du revêtement de sol.

D'autres systèmes prévoient l'utilisation de profilés de géométries spécifiques venant en recouvrement de couches de revêtement d'épaisseur donnée. L'utilisation de ces profilés de géométries spécifiques en fonction de la couche du revêtement entraîne une augmentation du nombre de pièces à prévoir, à la fois pour la fabrication et les opérations de maintenance de la caisse du véhicule.

C'est à ces inconvénients qu'entend plus particulièrement remédier l'invention en proposant une nouvelle caisse pour véhicule, notamment ferroviaire, qui permet, grâce à une structure simple utilisable avec des couches de revêtement apparent d'épaisseurs différentes, d'assurer un niveau de finition élevé et d'empêcher l'écoulement de l'eau vers l'intérieur de la structure de la caisse, sans avoir à utiliser un nombre important de pièces détachées différentes.

À cet effet, l'invention concerne une caisse pour véhicule du type précité, dans laquelle le capot est fixé, de préférence de façon amovible, à la paroi latérale et définit avec la cale un interstice de réception d'une bordure de la couche de revêtement, alors que la position relative du capot et de la cale est réglable et alors que la largeur de l'interstice est variable en fonction de la position relative du capot par rapport à cale.

Grâce à l'invention, la structure de la caisse est compatible avec une utilisation dans différentes configurations, notamment avec des couches de revêtement apparent d'épaisseurs différentes, adaptées à différents niveaux de confort d'un véhicule, tout en assurant une étanchéité efficace qui empêche les eaux de lavage de pénétrer dans une zone de jonction du plancher et de la paroi latérale, voire entre le plancher et le revêtement apparent. Ces avantages sont obtenus avec un capot et une cale utilisables dans les différentes configurations, ce qui évite d'avoir à gérer différentes références de pièces lors de la fabrication et lors de la maintenance de la caisse conforme à l'invention.

Selon des aspects avantageux mais non obligatoires de l'invention, une telle caisse peut incorporer une ou plusieurs des caractéristiques suivantes prises selon toute combinaison techniquement admissible :
- Des moyens de fixation du capot de finition à la paroi latérale comprennent au moins un trou oblong ménagé dans un premier élément parmi le capot et la paroi latérale et une vis engagée dans le trou oblong et dans un autre trou ménagé dans le deuxième élément parmi le capot et la paroi latérale.
- La cale est monobloc avec la paroi latérale ou avec la structure porteuse.
- La cale est une pièce rapportée sur la paroi latérale ou sur la structure porteuse, de préférence sous la forme d'un profilé.
- La paroi latérale comporte un logement de réception partielle du capot, de préférence dans une configuration où une face du capot tournée vers un volume intérieur de la caisse est affleurante avec une face de la paroi latérale située dans le prolongement du logement de réception et tournée vers le volume intérieur.
- Le capot est prévu pour être monté sur la paroi latérale dans au moins deux positions, à savoir une première position haute et une deuxième position basse, plus proche de la cale que la première position haute.
- Le capot est dans sa première position haute à l'intérieur du logement, un bord supérieur du capot est au contact d'un bord supérieur du logement et la face du capot tournée vers le volume intérieur de la caisse et la face de la paroi latérale située dans le prolongement du logement de réception et tournée vers le volume intérieur sont affleurantes et sans interstice entre elles.
- Le capot est équipé d'une semelle de glissement contre un fond du logement, cette semelle assurant un contact surfacique avec le fond du logement quelle que soit la position relative du capot par rapport à la cale.
- Une surface supérieure et latérale de la cale, sur laquelle est en appui une face inférieure de la bordure de la couche de revêtement, est globalement parallèle à une surface inférieure du capot qui est en appui contre une face supérieure de la bordure de la couche de revêtement, quelle que soit la position relative du capot par rapport à la cale.

Selon un autre aspect, l'invention concerne un procédé de montage d'une caisse telle que décrite précédemment, ce procédé comprenant une étape de réglage de la position relative du capot par rapport à la cale pour adapter la largeur de l'interstice en fonction de l'épaisseur de la bordure de la couche de revêtement.

Ce procédé induit les mêmes avantages que ceux mentionnés ci-dessus au sujet de la caisse de l'invention.

L'invention sera mieux comprise et d'autres avantages de celle-ci apparaîtront plus clairement à la lumière de la description qui va suivre, d'un mode réalisation d'une caisse et d'un procédé de montage conformes à son principe, donnée uniquement à titre d'exemple et faite en référence aux dessins annexés, dans lesquels :
- [Fig 1] la figure 1 est une section partielle d'une caisse de véhicule ferroviaire conforme à l'invention, dans une zone de jonction entre son plancher et l'une de ses parois latérales, ce plancher incorporant une couche de moquette présentant une première épaisseur ;
- [Fig 2] la figure 2 est une vue de détail en élévation selon la flèche II sur la figure 1 ;
- [Fig 3] la figure 3 est une vue analogue à la figure 1 lorsque le plancher incorpore une couche de moquette présentant une deuxième épaisseur, inférieure à celle de la couche de moquette de la figure 1 et
- [Fig 4] la figure 4 est une vue de détail en élévation analogue à la figure 2 selon la flèche IV sur la figure 3.

Une caisse 2 de véhicule ferroviaire conforme à l'invention est partiellement représentée sur les figures. Cette caisse comprend un plancher 4 et deux parois latérales dont une seule est visible sur les figures avec la référence 6. Les figures représentent la zone de jonction entre le plancher 4 et la paroi latérale 6.

Le plancher 4 comprend une structure porteuse 8 et une couche 10 de revêtement apparent, formée ici par de la moquette, dont on note e10 l'épaisseur.

La paroi 6 est une structure double peau avec une cloison extérieure 62 et une cloison intérieure 63 reliées entre elles par un fond 64. Le fond repose sur la surface supérieure 82 de la structure porteuse 8. Au voisinage du fond 64, la cloison intérieure 63 présente un décrochement 632 vers la cloison extérieure 62. Le décrochement 632 définit, du côté interne de la cloison intérieure 63, un logement 65 de réception d'un capot 12.

Les pièces 10, 12 et 63 délimitent le volume intérieur V2 de la caisse 2, dans la zone de jonction entre le plancher 4 et la paroi latérale 6.

Le capot 12 est composé d'une semelle 122 et d'une languette 124. La languette 124 constitue la partie inférieure du capot 12 et est rabattue vers le volume V2.

Une cale 66 est disposée dans le bas du décrochement 632, en-dessous du capot 12.

Dans cet exemple la cale 66 est monobloc avec la cloison intérieure 63, elle-même monobloc avec le fond 64 et la cloison extérieure 62. Tout comme le fond 64, la cale 66 repose sur la face supérieure 82 de la structure porteuse 8 ce qui lui permet d'encaisser un effort avec une composante verticale dirigée vers le bas.

On note 126 la surface de la languette 124 dirigée vers la cale 66. On note 662 la surface supérieure et latérale de la cale 66 dirigée vers la languette 124. Les surfaces 126 et 662 délimitent entre elles un interstice 500. On note f500 la largeur de l'interstice 500, c'est-à-dire sa dimension mesurée entre les surfaces 126 et 662, perpendiculairement à celles-ci.

Dans l'exemple, la surface supérieure et latérale 662 de la cale 66, contre laquelle est en appui une face inférieure de la couche de revêtement 10, est globalement parallèle à la surface 126 du capot 12 orientée vers la cale 66, contre laquelle est en appui une face supérieure de la couche de revêtement 10. Par globalement parallèle, on entend que les surfaces 662 et 126 sont parallèles à 10° près, de préférence à 5° près.

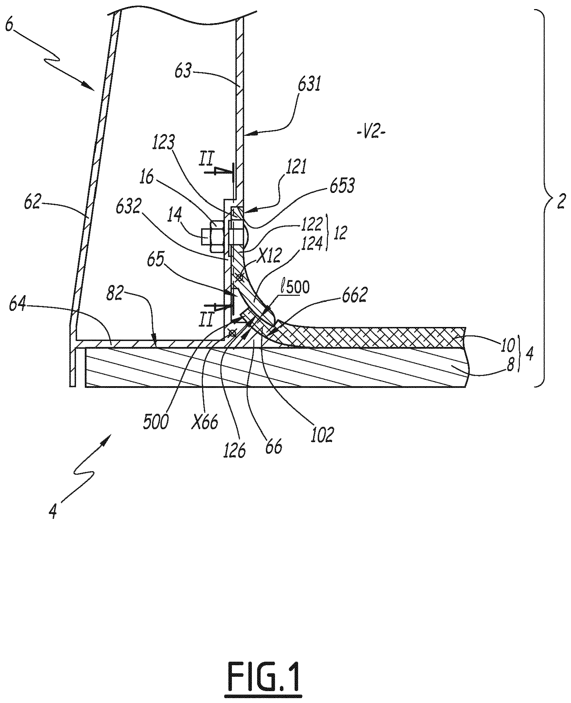

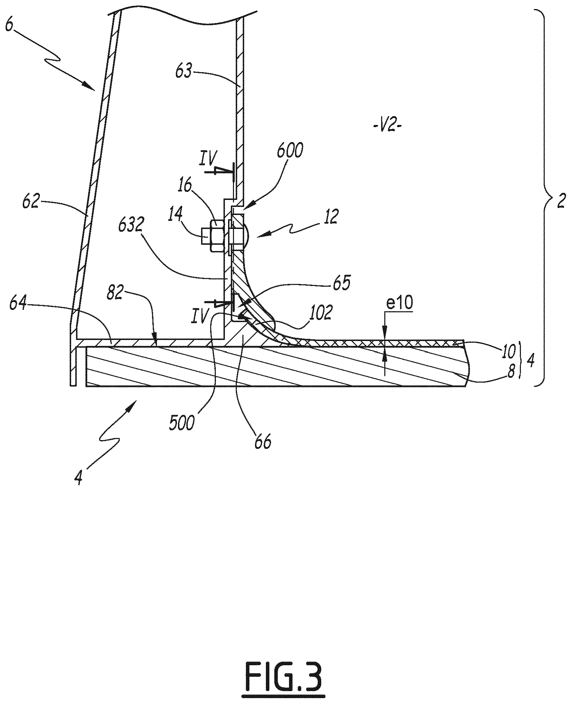

La surface 662 présente, en section transversale perpendiculaire à l'axe longitudinal X66 de la cale 66, une trace courbe, avec sa concavité tournée vers la surface 126. L'épaisseur de la cale 66, mesurée suivant une direction d'élévation de la caisse, est croissante en se rapprochant de la paroi 6, notamment du décrochement 632 ; c'est-à-dire vers la gauche des figures 1 et 3.

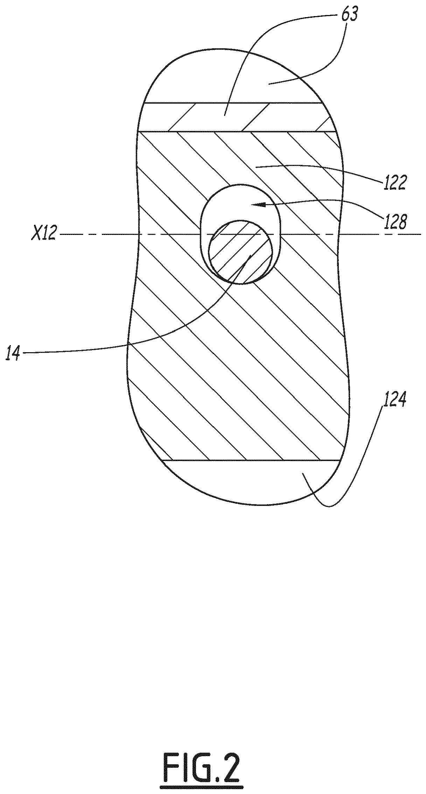

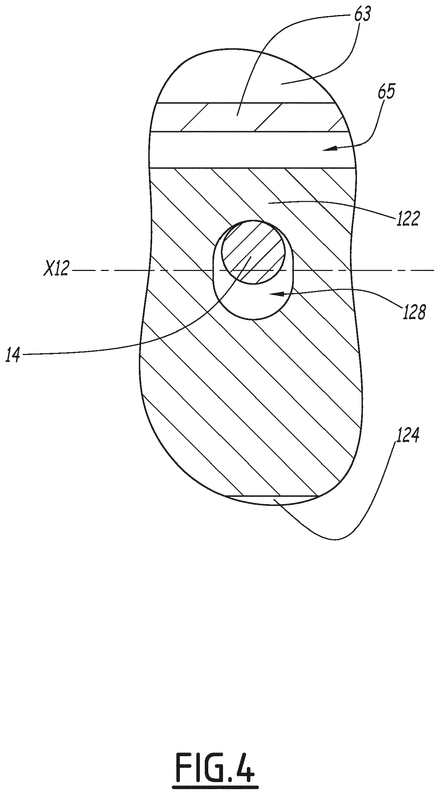

Le capot 12 est, en outre, percé d'un trou oblong 128 dont la plus grande dimension est d'axe vertical. On ne représente sur les figures 2 et 4 qu'un seul trou oblong 128, mais en pratique plusieurs trous oblongs 128 sont disposés sur la longueur du capot 12 qui est perpendiculaire au plan des figures 1 et 3 et représentée par son axe longitudinal X12 au figures 2 et 4.

Les axes X12 et X66 sont parallèles.

La tige d'une vis 14 traverse le trou oblong 128 et est vissée dans un écrou 16 lié à la cloison intérieure 63, du côté de cette cloison tourné vers la cloison extérieure 62. L'écrou 16 est lié par soudure ou tout autre procédé au niveau du décrochement 632 en regard d'un alésage circulaire de passage de la tige de la vis 14.

Compte tenu du caractère oblong du trou 128 il est possible d'ajuster verticalement la position du capot 12 dans le logement 65, entre une première position extrême haute représentée aux figures 1 et 2 et une deuxième position extrême basse représentée aux figures 3 et 4.

La semelle 122 du capot 12 assure un contact surfacique avec le fond du logement 65, qui est formé par le décrochement 632, quelle que soit la position relative du capot 12 par rapport à la cale 66, afin de faciliter les opérations de positionnement du capot 12 lors du montage ou de la maintenance de la caisse 2.

Sur les figures 1 et 3, le logement 65 est prévu pour que la semelle 122 du capot 12 vienne s'y insérer complètement, c'est-à-dire que la face intérieure 121 du capot 12, tournée vers le volume intérieur V2 de la caisse 2, est affleurante avec la face intérieure 631 de la cloison intérieure 63 de la paroi latérale 6 située au-dessus du logement 65 et tournée vers le volume intérieur V2. Par affleurante on entend que les faces 121 et 631 sont alignées et coplanaires. Ainsi, vu du volume intérieur V2, les surfaces 631 et 121 sont dans la continuité l'une de l'autre, ce qui améliore l'esthétique de la paroi 6 et facilite son nettoyage.

Le logement 65 de réception partielle du capot 12 est dans le prolongement de la paroi 63 et le fond du logement 65 à proximité du décrochement 632 est parallèle à la face 631 de la paroi latérale 6.

La semelle 122 du capot 12 assurant un contact surfacique avec le fond du logement 65 quelle que soit la position relative du capot 12 par rapport à la cale 66, la face 121 du capot 12 tournée vers un volume intérieur V2 de la caisse 2 est affleurante avec la face 631 quelle que soit la position relative du capot 12 par rapport à la cale 66.

Comme il ressort de la comparaison des figures 1 et 2, d'une part, avec les figures 3 et 4, d'autre part, la caisse 2 de l'invention peut incorporer une couche de revêtement 10 relativement épaisse, comme visible à la figure 1, ou relativement fine comme visible à la figure 3. En d'autres termes, l'épaisseur e10 de la couche de revêtement 10 est moins importante dans la configuration des figures 3 et 4 que dans la configuration des figures 1 et 2. L'invention permet d'accommoder ces deux valeurs de l'épaisseur e10, avec les mêmes éléments constitutifs de la caisse 2, à part la couche de revêtement 10.

Dans la première configuration des figures 1 et 2, le capot 12 est positionné relativement loin de la cale 66, de telle sorte que la largeur f500 de l'interstice 500 prend une première valeur relativement grande, adaptée à la valeur relativement importante de l'épaisseur e10. Ceci permet de loger une bordure 102 de la couche de revêtement 10 dans l'interstice 500, entre les surfaces 126 et 662. Dans la deuxième configuration des figures 3 et 4, le capot 12 est positionné relativement près de la cale 66, c'est-à-dire plus proche de celle-ci que dans la première position, de telle sorte que la largeur f500 de l'interstice 500 prend une deuxième valeur relativement petite, adaptée à la valeur relativement faible de l'épaisseur e10. Ceci permet de loger la bordure 102 de la couche de revêtement 10 dans l'interstice 500, entre les surfaces 126 et 662, sans laisser subsister une fente dans laquelle des eaux de lavages pourraient pénétrer. Dans les deux configurations, la surface inférieure de la bordure 102 est en appui contre la surface 662, alors que sa surface supérieure est en appui contre la surface 126.

Ainsi, le caractère ajustable de la position relative du capot 12 par rapport à la cale 66 permet d'ajuster la largeur f500 de l'interstice en fonction de l'épaisseur e10 de la couche de revêtement 10. Le capot 12 protège efficacement la bordure 102 contre l'écoulement des eaux de lavage. La structure interne de la caisse 2 est ainsi protégée contre l'humidité. En particulier, il n'y a pas de risque que de l'eau s'infiltre sous la couche de revêtement 10 ou entre le fond 64 et la structure porteuse 8.

Une étanchéité est ainsi réalisée sans avoir à utiliser de mastic et alors même que la caisse 2 est compatible avec une couche de revêtement 10, telle qu'une moquette, d'épaisseur relativement importante, par exemple dans un compartiment de première classe, et avec une couche de revêtement 10 d'épaisseur plus faible, par exemple avec une moquette dans un compartiment de deuxième classe, tout en utilisant les mêmes composants dans les deux configurations représentées respectivement aux figures 1 et 2 et aux figures 3 et 4.

En outre la géométrie de la cale 66, avec son épaisseur croissante en se rapprochant de la paroi latérale 6, tend à renvoyer un liquide vers la droite des figures 1 et 3, c'est-à-dire vers le volume intérieur V2, évitant ainsi l'écoulement de liquide dans la jonction de la structure porteuse 8 et de la paroi latérale 6 ou entre la structure porteuse 8 et le revêtement 10.

Dans la configuration des figures 1 et 2, un bord supérieur 123 du capot 12 est en contact avec un bord supérieur 653 du logement 65, de sorte qu'aucun interstice n'est créé à ce niveau, dans lequel de la poussière ou des salissures pourraient s'accumuler. Dans la configuration des figures 3 et 4, un interstice 600 est créé à ce niveau. La finition la plus esthétique est ainsi prévue dans la configuration des figures 1 et 2, c'est-à-dire dans le cas du compartiment de première classe dans cet exemple.

Lors du montage de la caisse 2, le capot 12 est placée en position haute, correspondant à la position des figures 1 et 3, afin de permettre l'insertion de la bordure 102 de la couche de revêtement 10 dans l'interstice 500 puis, si besoin, le capot 12 est descendu jusqu'à ce que la surface 126 vienne en appui ou vienne assurer une compression suffisante de la bordure 102 de la couche de revêtement 10, permettant d'obtenir les performances attendues en terme de maintien de la couche de revêtement 10 et d'étanchéité. La position finale du capot 12 peut tenir compte d'un éventuel écrasement de la bordure 102 de la couche de revêtement 10 entre les pièces 12 et 66.

On remarque que le capot 12 peut prendre n'importe quelle position intermédiaire entre celles représentées aux figures 1 et 2, d'une part, 3 et 4, d'autre part, ce qui permet d'adapter la configuration de la caisse 2 à une épaisseur e10 de la couche de moquette 10 comprise entre celles représentées sur les figures. Dans une telle position intermédiaire du capot 12, une face inférieure de la bordure 102 est également en appui contre la surface 662, alors qu'une face supérieure de la bordure 102 est également en appui contre la surface 126.

Selon une variante non représentée ici, la cale 66 peut être monobloc avec la structure porteuse 8 du plancher 4 et non pas avec la paroi 6.

Selon encore une autre variante, la cale 66 peut être une pièce rapportée sur la paroi latérale 6 ou sur la structure porteuse 8. Dans ce cas la cale 66 peut, par exemple, être produite sous la forme d'un profilé de matière métallique ou synthétique et disposée à la jonction entre la structure porteuse 8 et la paroi latérale 6 et éventuellement immobilisée par un moyen temporaire, tel qu'une bande de colle, éventuellement repositionnable, ou immobilisée par un moyen définitif comme un cordon de soudure ou tout autre moyen équivalent.

Selon une variante non représentée, le trou oblong 128 peut être ménagé dans le décrochement 632 de la paroi latérale 6. Dans ce cas, seul un alésage circulaire de passage de la tige de la vis 14 peut être percé dans le capot 12. En variante, des trous oblongs sont ménagés à la fois dans le capot 12 et dans le décrochement 632.

Selon une autre variante, la surface supérieure et latérale 662 de la cale 66 peut, dans le plan des figures 1 et 3, présenter une trace rectiligne, ou tout autre arc d'ellipse ou forme courbe avec sa concavité tournée vers le volume intérieur V2 ou à l'opposé de celui-ci. Dans ce cas, la forme de la surface 126 est adaptée.

Selon une autre variante, la couche de moquette 10 peut être remplacée par une couche de linoléum ou d'un autre revêtement apparent recouvrant la structure porteuse 4.

Selon encore une autre variante, la surface 126 est au contact de la surface 662 lorsque le capot 12 est dans sa deuxième position extrême basse, en l'absence de couche de revêtement.

L'invention est décrite ci-dessus dans le cas de sa mise en œuvre dans une caisse de véhicule ferroviaire, à savoir une voiture pour passagers de train. Elle peut être mise en œuvre dans d'autres véhicules ferroviaire, par exemple un tramway, et plus généralement dans tout véhicule, notamment de transport collectif, tel qu'un bus, un ferry ou un aéronef.

Le mode de réalisation et les variantes mentionnées ci-dessus peuvent être combinés entre eux pour générer de nouveaux modes de réalisation de l'invention compris dans le périmètre de protection défini par les revendications.

## Revendications

1. Caisse pour véhicule, notamment ferroviaire, cette caisse comprenant :
- une structure porteuse de plancher (8),
- au moins une paroi latérale (6),
- une cale (66) disposée à la jonction entre la structure porteuse (8) et la paroi latérale (6),
- une couche de revêtement apparent (10) disposée sur la structure porteuse,
- un capot de finition (12) recouvrant une bordure (102) de la couche de revêtement (10),
**caractérisée en ce que** le capot (12) est fixé, de préférence de façon amovible, à la paroi latérale (6) et définit avec la cale (66) un interstice (500) de réception de la bordure (102) de la couche de revêtement (10), **en ce que** la position relative du capot (12) par rapport à la cale (66) est réglable et **en ce que** la largeur (f500) de l'interstice est variable en fonction de la position relative du capot (12) par rapport à la cale (66).

2. Caisse selon la revendication 1, **caractérisée en ce que** des moyens de fixation du capot de finition (12) à la paroi latérale (6) comprennent au moins un trou oblong (128) ménagé dans un premier élément parmi le capot (12) et la paroi latérale (6) et une vis (14) engagée dans le trou oblong (128) et dans un autre trou ménagé dans le deuxième élément parmi le capot (12) et la paroi latérale (6).

3. Caisse selon l'une quelconque des revendications précédentes, **caractérisée en ce que** la cale (66) est monobloc avec la paroi latérale (6) ou avec la structure porteuse (8).

4. Caisse selon l'une des revendications 1 ou 2, **caractérisée en ce que** la cale (66) est une pièce rapportée sur la paroi latérale (6) ou sur la structure porteuse (8), de préférence sous la forme d'un profilé.

5. Caisse selon l'une quelconque des revendications précédentes, **caractérisée en ce que** la paroi latérale (6) comporte un logement (65) de réception partielle du capot (12), de préférence dans une configuration où une face (121) du capot (12) tournée vers un volume intérieur (V2) de la caisse (2) est affleurante avec une face (631) de la paroi latérale (6) située dans le prolongement du logement de réception et tournée vers le volume intérieur.

6. Caisse selon l'une quelconque des revendications précédentes, **caractérisée en ce que** le capot (12) est prévu pour être monté sur la paroi latérale (6) dans au moins deux positions, à savoir une première position haute et une deuxième position basse, plus proche de la cale (66) que la première position haute.

7. Caisse selon les revendications 5 et 6, **caractérisée en ce que**, lorsque le capot (12) est dans sa première position haute à l'intérieur du logement (65), un bord supérieur (123) du capot (12) est au contact d'un bord supérieur (653) du logement (65) et la face (121) du capot (12) tournée vers le volume intérieur (V2) de la caisse (2) et la face (631) de la paroi latérale (6) située dans le prolongement du logement de réception et tournée vers le volume intérieur sont affleurantes et sans interstice entre elles.

8. Caisse selon l'une des revendications 5 ou 7, **caractérisée en ce que** le capot (12) est équipé d'une semelle (122) de glissement contre un fond du logement (65), cette semelle (122) assurant un contact surfacique avec le fond du logement quelle que soit la position relative du capot (12) par rapport à la cale (66).

9. Caisse selon l'une quelconque des revendications précédentes, **caractérisée en ce qu'**une surface supérieure et latérale (662) de la cale (66), sur laquelle est en appui une face inférieure de la bordure (102) de la couche de revêtement (10), est globalement parallèle à une surface inférieure (126) du capot (12) qui est en appui contre une face supérieure de la bordure de la couche de revêtement (10), quelle que soit la position relative du capot (12) par rapport à la cale (66).

10. Procédé de montage d'une caisse (2) selon l'une quelconque des revendications précédentes, **caractérisé en ce qu'**il comprend une étape de réglage de la position relative du capot (12) par rapport à la cale (66) pour adapter la largeur (ℓ500) de l'interstice (500) en fonction de l'épaisseur (e10) de la bordure de la couche de revêtement (10).

## Patentansprüche

1. Wagenkasten für ein Fahrzeug, insbesondere Schienenfahrzeug, dieser Wagenkasten umfassend:
- eine Bodenträgerstruktur (8),
- mindestens eine Seitenwand (6),
- einen Keil (66), der an der Verbindungsstelle zwischen der Trägerstruktur (8) und der Seitenwand (6) angeordnet ist,
- eine sichtbare Deckschicht (10), die auf der Trägerstruktur angeordnet ist, - eine Abschlusskappe (12), die einen Rand (102) der Deckschicht (10) abdeckt,
**dadurch gekennzeichnet, dass** die Kappe (12) vorzugsweise abnehmbar an der Seitenwand (6) befestigt ist und mit dem Keil (66) einen Spalt (500) zum Aufnehmen des Rands (102) der Deckschicht (10) definiert, dass die relative Position der Kappe (12) in Bezug auf den Keil (66) einstellbar ist und dass die Breite (I500) des Spalts abhängig von der relativen Position der Kappe (12) in Bezug auf den Keil (66) variabel ist.

2. Kasten nach Anspruch 1, **dadurch gekennzeichnet, dass** Befestigungseinrichtungen der Abschlusskappe (12) an der Seitenwand (6) mindestens ein Langloch (128) umfassen, das in einem ersten Element von der Abschlusskappe (12) und der Seitenwand (6) ausgebildet ist, und eine Schraube (14), die in das Langloch (128) und in ein weiteres Loch, das in dem zweiten Element unter der Kappe (12) und dem Seitenwand (6) ausgebildet ist, eingreifen.

3. Kasten nach einem der vorherigen Ansprüche, **dadurch gekennzeichnet, dass** der Keil (66) einstückig mit der Seitenwand (6) oder mit der Trägerstruktur (8) ist.

4. Kasten nach einem der Ansprüche 1 oder 2, **dadurch gekennzeichnet, dass** der Keil (66) ein an der Seitenwand (6) oder an der Trägerstruktur (8) angebrachtes Teil ist, vorzugsweise in Form eines Profils.

5. Kasten nach einem der vorherigen Ansprüche, **dadurch gekennzeichnet, dass** die Seitenwand (6) eine Aufnahme (65) zum teilweisen Aufnehmen der Kappe (12) umfasst, vorzugsweise in einer Konfiguration, in der eine Fläche (121) der Kappe (12), die einem Innenvolumen (V2) des Wagenkastens (2) zugewandt ist, bündig mit einer Fläche (631) der Seitenwand (6) ist, die sich in der Verlängerung der Aufnahmeaufnahme befindet und dem Innenvolumen zugewandt ist.

6. Kasten nach einem der vorherigen Ansprüche, **dadurch gekennzeichnet, dass** die Kappe (12) dazu bereitgestellt ist, in mindestens zwei Positionen an der Seitenwand (6) angebracht zu werden, nämlich an einer ersten, oberen Position und an einer zweiten, unteren Position, die näher an dem Keil (66) ist als die erste, obere Position.

7. Kasten nach Anspruch 5 und 6, **dadurch gekennzeichnet, dass**, wenn die Kappe (12) an ihrer ersten oberen Position innerhalb des Gehäuses (65) ist, eine obere Kante (123) der Kappe (12) eine obere Kante (653) der Aufnahme (65) berührt und die dem Innenraum (V2) der Kiste (2) zugewandte Seite (121) der Kappe (12) und die dem Innenraum zugewandte Seite (631) der Seitenwand (6), die in der Verlängerung der Aufnahme ist, bündig und ohne Zwischenraum dazwischen sind.

8. Kasten nach einem der Ansprüche 5 oder 7, **dadurch gekennzeichnet, dass** die Kappe (12) mit einer Sohle (122) zum Gleiten gegen einen Boden der Aufnahme (65) ausgestattet ist, wobei diese Sohle (122) einen flächigen Kontakt mit dem Boden der Aufnahme gewährleistet, unabhängig von der relativen Position der Kappe (12) in Bezug auf den Keil (66).

9. Kasten nach einem der vorherigen Ansprüche, **dadurch gekennzeichnet, dass** eine obere und seitliche Fläche (662) des Keils (66), an der eine untere Fläche des Rands (102) der Deckschicht (10) anliegt, generell parallel zu einer unteren Fläche (126) der Abdeckung (12) ist, die an einer oberen Fläche des Rands der Deckschicht (10) anliegt, unabhängig von der relativen Position der Abdeckung (12) in Bezug auf den Keil (66).

10. Verfahren zur Montage eines Wagenkastens (2) nach einem der vorherigen Ansprüche, **dadurch gekennzeichnet, dass** es einen Schritt zum Einstellen der relativen Position der Kappe (12) in Bezug auf den Keil (66) umfasst, um die Breite (i500) des Spalts (500) abhängig von der Stärke (e10) des Rands der Deckschicht (10) anzupassen.

## Claims

1. A body for a vehicle, in particular a rail vehicle, this body comprising:
- a floor support structure (8),
- at least one side wall (6);
- a shim (66) arranged at the junction between the support structure (8) and the side wall (6),
- a visible covering layer (10) arranged on the support structure,
- a finishing cap (12) covering a border (102) of the covering layer (10),
**characterized in that** the cap (12) is fastened, preferably removably, to the side wall (6) and defines, with the shim (66), a gap (500) for receiving a border (102) of the covering layer (10), **in that** the relative position of the cap (12) with respect to the shim (66) is adjustable and **in that** the width (f500) of the gap varies based on the relative position of the cap (12) with respect to the shim (66).

2. The body according to claim 1, **characterized in that** means for fastening the finishing cap (12) to the side wall (6) comprise at least one oblong hole (128) arranged in a first element among the cap (12) and the side wall (6) and a screw (14) engaged in the oblong hole (128) and in another hole arranged in the second element among the cap (12) and the side wall (6).

3. The body according to any one of the preceding claims, **characterized in that** the shim (66) is monobloc with the side wall (6) or with the support structure (8).

4. The body according to one of claims 1 or 2, **characterized in that** the shim (66) is a part attached on the side wall (6) or on the support structure (8), preferably in the form of a profile.

5. The body according to any one of the preceding claims, **characterized in that** the side wall (6) comprises a housing (65) for partially receiving the cap (12), preferably in a configuration where a face (121) of the cap (12) facing toward an inner volume (V2) of the body (2) is flush with a face (631) of the side wall (6) located in the extension of the receiving housing and facing toward the inner volume.

6. The body according to any one of the preceding claims, **characterized in that** the cap (12) is provided to be mounted on the side wall (6) in at least two positions, namely a first high position and a second low position, closer to the shim (66) than the first high position.

7. The body according to claims 5 and 6, **characterized in that**, when the cap (12) is in its first high position inside the housing (65), an upper edge (123) of the cap (12) is in contact with an upper edge (653) of the housing (65) and the face (121) of the cap (12) facing toward the inner volume (V2) of the body (2) and the face (631) of the side wall (6) located in the extension of the receiving housing and facing toward the inner volume are flush and have no gap between them.

8. The body according to one of claims 5 or 7, **characterized in that** the cap (12) is equipped with a soleplate (122) sliding against a bottom of the housing (65), this soleplate (122) providing surface contact with the bottom of the housing irrespective of the relative position of the cap (12) with respect to the shim (66).

9. The body according to any one of the preceding claims, **characterized in that** an upper and side surface (662) of the shim (66), on which a lower face of the border (102) of the covering layer (10) is bearing, is globally parallel to a lower surface (126) of the cover (12) that is bearing against an upper face of the border of the covering layer (10), irrespective of the relative position of the cap (12) with respect to the shim (66).

10. A method for mounting a body (2) according to any one of the preceding claims, **characterized in that** it comprises a step for adjusting the relative position of the cap (12) with respect to the shim (66) in order to adapt the width (f500) of the gap (500) as a function of the thickness (e10) of the border of the covering layer (10).
